# EUROPEAN PATENT APPLICATION

(11) **EP 1 480 458 A2**
(43) Date of publication of application: **24.11.2004**
(21) Application number: 04011209.6
(22) Date of filing: 11.05.2004
(51) Int. Cl.: H04N 7/16, H04N 7/167

(54) **Descrambling device**

(30) Priority: 20.05.2003 KR 2003031975
(71) Applicant: Samsung Electronics Co., Ltd., Suwon-si, Gyeonggi-do (KR)
(72) Inventor: Shin, Kug, Yeongtong-gu Suwon-si Gyeonggi-do (KR); Koh, Jun-Ho, Yeongtong-gu Suwon-si Gyeonggi-do (KR); Oh, Yun-Je, Yeongtong-gu Suwon-si Gyeonggi-do (KR)
(74) Representative: Grünecker, Kinkeldey, Stockmair & Schwanhäusser Anwaltssozietät

(57) **Abstract**

A complex scramble release device for a plurality of scrambled digital broadcasting streams and an optical subscriber network employing the complex scramble release device enables a user to watch all MPTSs provided in a system through only one set top box in a broadcasting communication convergence system. The system is capable of providing several MPTSs encrypted in ways varying by different types of broadcasters a includes a broadcast receiving unit for receiving MPTSs from an outside source, and transmitting PID information of the MPTS to a control section; a switch for receiving the MPTSs from the broadcast receiving unit, and switching scrambled MPTSs and MPTSs, which have not been scrambled; and a plurality of descramblers for descrambling the scrambled MPTSs from among the MPTSs switched by the switch. Subsequently, the descrambled MPTSs are output. A control section receives the PID information from the broadcast receiving unit, and then controls the switch so that a MPTS, which requires a descrambling, can be switched to the descramblers.

## Description

The present invention relates to a navigation system. More particularly, the present invention relates to an apparatus for servicing a CAS broadcasting that can be encrypted in various ways in a broadcasting communication convergence system.

In the fields of satellite broadcasting and cable broadcasting, all of the broadcasting contents are provided to subscribers through a cable or satellite to satellite dish by means of a broadcast method. In order to account for costs and protect contents, a satellite or cable provider will performs a conditional access system (CAS) broadcasting which encrypts the stream of data, and then transmits the encrypted stream of data, which then must be decrypted by the subscribers with special equipment that they pay a monthly charge for.

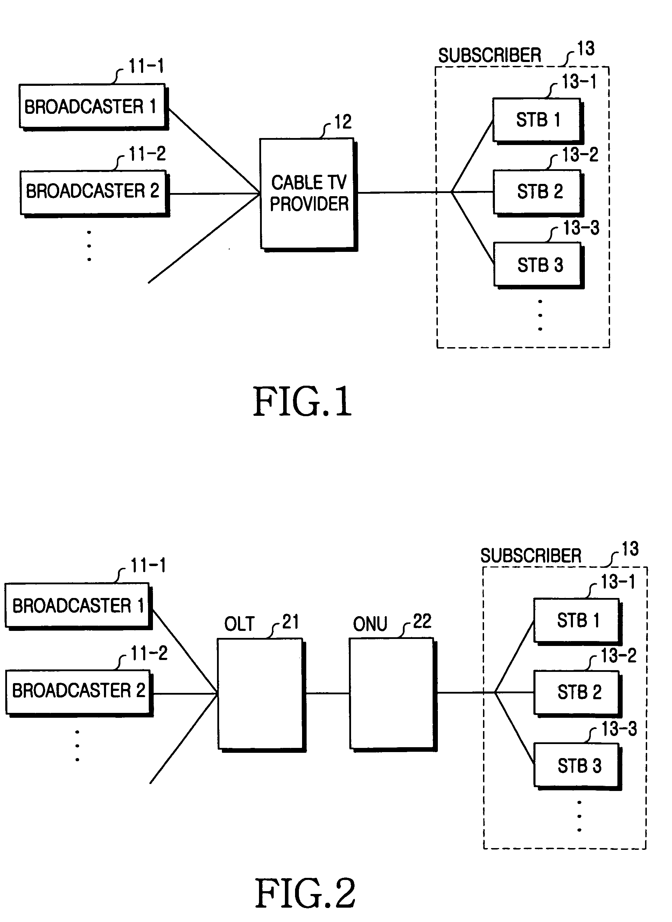

A cable television network will next be described as an example of a conventional conditional access broadcasting (CAS) system known in the prior art. This terminology may also be applied to a satellite broadcasting, etc. FIG 1 shows a construction of one embodiment of a cable television network according to the prior art.

FIG 1 shows that a cable television provider 12 receives broadcasting contents from respective broadcasters 11-1 and 11-2, and then transmits all broadcasting contents through one hybrid fiber coaxial (HFC) network. Accordingly, all broadcasting contents are transmitted to a subscriber 13.

However, in the case of certain broadcasters that transmit pay broadcasting channels, such as pay-per-view or premium pay channels, there are several problems with this type of system. Since all broadcasting contents are transmitted to all subscribers through the HFC, it is difficult to prevent subscribers which have not paid any money from accessing the contents. Particularly in the United States, cable piracy commonly occurs at a loss of millions of dollars per year to the cable companies.

The meaning of pay broadcasting service is further described, *infra.* Pay broadcasting service is a business model of the broadcasters 11-1 and 11-2. The broadcasters 11-1 and 11-2 and an individual contents provider can provide environment capable of supporting various types of services through the pay broadcasting service, such as sporting events like a boxing match, special concerts, or premium pay channels such as Home Box Office (HBO).

In order to protect the pay broadcasting service from having their pay services pirated by non-subscribers or unauthorized subscribers, a cable network, etc., which cannot transmit divided channels after dividing respective broadcasting channels, employs a CAS (Conditional Access System) which can encrypt broadcasting signals transmitted from the broadcasters 11-1 and 11-2 and enables only subscriber 13 subscribed in the pay broadcasting service to watch the broadcasting, thereby realizing the pay broadcasting service.

Typically, the broadcasters 11-1 and 11-2 demand a receiving fee directly from the subscriber 13 using the service, by means of the CAS. A CAS embedded receiver (CAS-embedded STB Set Top Box) is a subscriber management device of the broadcasters 11-1 and 11-2.

In general the services that require subscriber management can be divided into: (1) a pay channel service; (2)a PPV (Pay Per View) service; and (3) an annexed service. With regard to the pay channel service, a predetermined receiving fee is charged for a particular channel, reception of which has been requested, is collected, and then reception of broadcasting for the channel is enabled. With regard to the PPV service, a receiving fee is charged for each program, which is calculated and claimed on the basis of reception time. With regard to the annexed service, not only is a receiving fee charged for each program but there are also charges for other services provided in the program that are collected. Accordingly, in the CAS, the above-mentioned three types of services should be managed respectively.

Therefore, in order to screen for conditional access, the CAS utilizes either a proper key, or gives an address to each STB.

With regard to use of the proper key, it is input to a decryptor together with a particular password included in a broadcasting signal. Subsequently, a new password is obtained through a particular calculation method. A broadcasting signal is scrambled by a scrambler on a transmission side in order to prevent a reception from being reproduced as an original signal through the new password.

In such a CAS, the broadcasters 11-1 and 11-2 sometimes utilize a particular encryption method and a subscriber management method respectively/. There exists various types of CAS in the world. Accordingly, each broadcaster has no option but to use STBs 13-1 to 13-3 which are different from each other.

Furthermore, in some cases, the subscriber 13 must have a plurality of STBs 13-1 to 13-3 in the same area in order to receive various digital cable broadcasting.

In addition, STB manufacturers must pay royalty fees to the broadcasters 11-1 and 11-2 even if the STB manufacturers supply the broadcasters 11-1 and 11-2 with the STBs through an OEM, or sell the STBs in an open market. Further, since the market is very limited, the STB manufacturers can't produce various types of STBs suitable for consumer's taste like general TVs or home electronics.

Also, with the rapid development of transport networks, an optical subscriber network having a Active/Passive Optical Network (A/PON) of the type that has been used in the general trend in current communications. Particularly, in the optical subscriber network utilizing a A/PON, there has been active pursuit of research into a broadcasting communication convergence system for convergence of a broadcasting and communication.. In such a broadcasting communication convergence system, broadcasting is transmitted to a subscriber desiring channel information through switching in an Optical Line Termination (OLT, central unit in a A/PON) and an Optical Network Unit (ONU). This system contrasts with the conventional broadcasting method in which entire channels are transmitted to a subscriber. Accordingly, in a broadcasting communication convergence system using an optical subscriber network, new research into encryption/decrytion methods for a pay broadcasting service are necessary.

FIG 2 provides a block diagram that shows a construction of one embodiment of a broadcasting communication convergence system by means of an optical subscriber network employing a conventional CAS.

As shown in FIG 2, the broadcasting communication convergence system, by means of an optical subscriber network (ONU) (22), has employed a conventional CAS that includes broadcasters 11-1 and 11-2 for providing broadcasting contents. An Optical Line Terminal (OLT) (21) which is a sub-system located between a subscriber 13 and a service node, an ONU (Optical Network Unit) (22) which is a terminating set, and a subscriber 13, who watches the transmitted broadcast. Herein, the OLT (21) receives a broadcast signal and a communication signal from the broadcasters 11-1 and 11-2 and the communication provider, converts the received electric signals into an optical signal containing bundled components corresponding to the electric signals, and then subsequently transmits the optical signal. The ONU (22) receives information from the OLT 21, and transmits the received information to the subscriber 13.

Now, a more detailed description of the above is provided. For services such as a pay broadcasting, etc., the broadcasters 11-1 and 11-2, who desire to manage subscribers, encrypt respective broadcasting contents in other ways, and transmits the encrypted contents to the OLT (21). The OLT (21) converts the transmitted broadcasting signals into an optical signal containing bundled components corresponding to the electric signals, and then transmits the optical signal (the communication signal is also included, but the part regarding the communication signal is not described in the present invention).

Furthermore, the ONU (22) receives entire broadcasting signals carried by the optical signal from the OLT (21), and then serves to switch the received signal according to subscribers on the basis of favorite channel information received from respective subscriber 13.

The signal transmitted from the ONU (22) is received in the STBs 13-1 to 13-3 for decryption, and the received signal is decrypted by the STBs 13-1 to 13-3. Accordingly, the subscriber 13 watches a corresponding broadcast.

However, in view of transmission, the broadcast communication convergence system described above is very different from conventional cable network and satellite communication network, and it is thus difficult to apply such encryption/decryption methods.

That is, since a MPTSs (MultiProgram Transport Streams), which is digital broadcasting data provided by the ONU (22) in the broadcasting communication convergence system, is a transport stream encrypted in other ways according to the broadcasters 11-1 and 11-2, the subscriber 13 must utilize the STBs 13-1 to 13-3 having a decryption function in order to watch a desirous broadcasting after decoding the MPTS.

Accordingly, in order to watch various CAS broadcasts, each of which having employed encryption methods that are different from each other, is provided through switching in the ONU (22). However, the subscriber 13 must have several STBs or a multi-CAS STB capable of decrypting respective encryption method. However, since a satellite broadcast and a cable broadcast have an authentication method different from each other, the two types of broadcasts can't be seen through one multi-CAS STB. Accordingly, the subscriber 13 must have more than one STB. Particularly, since such STB containing decryption function is expensive, it imposes a heavy burden on the subscriber 13, and increases the clutter around the television set because two boxes have to be connected to the television set, typically with an A/B switch, in addition to the DVD and VHS units that are typical in an American home.

Further, when a MPTS that has been encrypted in a new method is added to the OLT (21), the STBs 13-1 to 13-3 in the subscriber 13 must be replaced, or the decryption program contained in the STBs 13-1 to 13-3 must be modified.

In providing a broadcasting service such as a pay broadcasting, which requires a subscriber management, there is a problem in the prior art that all of the broadcasting data is transmitted to each subscriber, and each subscriber can receive/utilize the broadcasting data. Accordingly, a broadcaster intentionally scrambles a broadcasting, and then transmits the scrambled broadcasting. Further, in order to watch the scrambled broadcasting, a subscriber must purchase or rent a STB having a descrambling function.

Accordingly, it is a waste of time and resources to transmit broadcastings scrambled from the broadcasters, only to descramble the transmitted broadcastings through a STB of a subscriber. According to this problem, it is often necessary to perform a descrambling operation in a transport network so that a subscriber can receive broadcasts through one STB, even if the broadcasts are scrambled according to the transmissions of a plurality of broadcasters.

Accordingly, the present invention has been made to solve the above-mentioned problems occurring in the prior art. In a broadcasting communication convergence system using an optical subscriber network according to the present invention, since an ONU switches a broadcasting according to subscribers, and then transmits separate broadcasting, all the broadcasting is not transmitted, which is unlike prior art systems.

It is the object of the present invention to provide a complex scramble release device for a plurality of scrambled digital broadcasting streams and an optical subscriber network employing the complex scramble release device.

This object is solved by the subject matters of the independent claims.

Preferred embodiments are defined in the dependent claims.

The presently claimed invention enables a user to watch all MPTSs provided in a system through only a single set top box in a broadcasting communication convergence system capable of providing several MPTSs encrypted in ways varying by the plurality of broadcasters, which often use slightly different formats.

According to the preferred aspect of the present invention, there is provided a complex scramble release device for releasing a plurality of scrambled digital broadcasting streams in a broadcasting communication convergence system comprising: a broadcast receiving unit for receiving MPTSs from an outside source, and transmitting Packet Identifier Definition, referred to as (PID) information of the MPTSs to a control section; a switch for receiving the MPTSs from the broadcast receiving unit, and switching scrambled MPTSs and MPTSs, which have not been scrambled; a plurality of descramblers for descrambling the scrambled MPTSs from among the MPTSs switched by the switch, and then outputting the descrambled MPTSs; and a control section for receiving the PID information from the broadcast receiving unit, and then controlling the switch so that MPTSs, which require a descrambling, can be switched to the descramblers.

In order to accomplish these goals and realize the aspects of the invention, it is preferable that there is provided an optical subscriber network, which has employed a complex scramble release device for a plurality of scrambled digital broadcasting streams in a broadcasting communication convergence system comprising: an OLT including a complex scramble release device for receiving respective MPTSs transmitted from a plurality of broadcasters, releasing the scramble of the MPTSs, and then transmitting them, an electrooptic converter for receiving the MPTSs outputted from the complex scramble release device, and then converting the MPTSs into optical signals, a WDM multiplexer for multiplexing the converted MPTSs into one optic signal, an optical transmission section for transmitting the multiplexed one optic signal; and an ONU for performing wavelength division demultiplexing on the optic signal transmitted from the OLT, converting the demultiplexed signals into electric signals, and then switching the converted MPTSs according to subscribers.

According to yet another aspect of the present invention present invention, there is provided an optical subscriber network employing a complex scramble release device for a plurality of scrambled digital broadcasting streams in a broadcasting communication convergence system comprising: an OLT for receiving respective MPTSs transmitted from a plurality of broadcasters, converting the received MPTSs into optical signals, multiplexing the converted optical signals in one optical signal, and then outputting one optical signal; a WDM demultiplexer for performing wavelength division demultiplexing on the optic signal transmitted from the OLT; an optoelectric converter for converting the demultiplexed signals into electric signals, respectively; a complex scramble release device for receiving the converted MPTSs, releasing a scrambling of the MPTSs, and then transmitting them; a first switch for receiving the MPTSs outputted from the complex scramble release device, and switching the MPTSs according to subscribers; and a first control section for receiving favorite channels from a subscriber, and controlling the first switch so that a corresponding channel of an input MPTS of the first switch can be connected to the subscriber.

The above, features and advantages of the present invention will be more apparent from the following detailed description taken in conjunction with the accompanying drawings, in which:
FIG 1 is a block diagram showing a construction of one aspect of a cable television network according to the prior art;
FIG 2 is a block diagram showing a construction of one embodiment of a broadcasting communication convergence system by means of an optical subscriber network employing a conventional CAS;
FIG 3 is a block diagram showing a construction of one aspect of a complex scramble release device in a broadcasting communication convergence system according to the present invention;
FIG 4 is an exemplary view of a channel/broadcasting table utilized in a complex scramble release device in a broadcasting communication convergence system;
FIG 5 is a view showing a construction of one particular aspect in the case in which the complex scramble release device according to the present invention is applied to an OLT in a broadcasting communication convergence system; and
FIG 6 is a view showing a construction of one particular aspect in the case in which the complex scramble release device according to the present invention is applied to an ONU in a broadcasting communication convergence system.

Hereinafter, according to several aspects of the present invention will be described with reference to the accompanying drawings. The same reference numerals are used to designate the same elements as those shown in other drawings. In the following description of the present invention, a detailed description of known functions and configurations incorporated herein will be omitted when it may obscure the meaning of the invention. the subject matter of the present invention rather unclear. In particular, the present invention provides a broadcasting communication convergence system, but a description and drawing regarding a communication signal is omitted because the description and drawing regarding a communication signal do not correspond to the subject matter of the present invention.

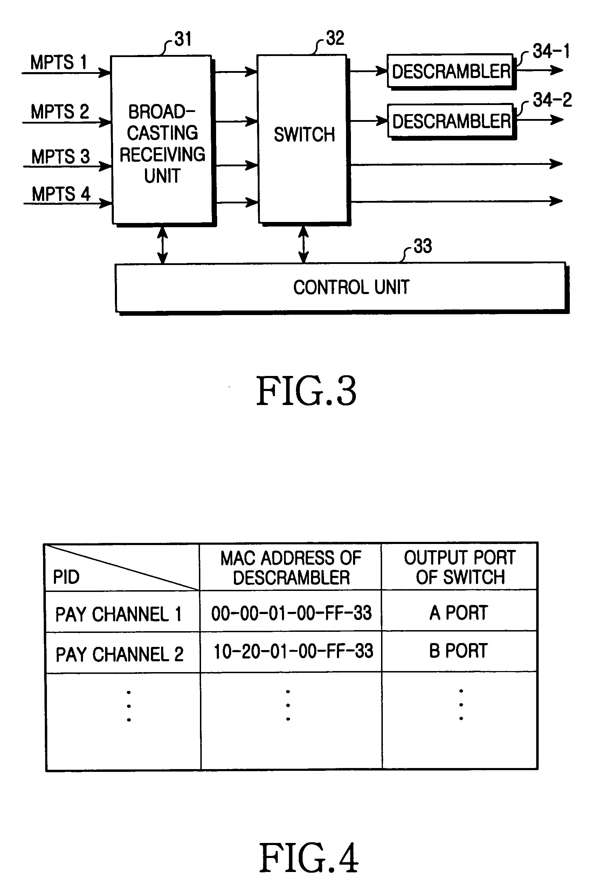

FIG 3 is a block diagram showing a construction of one aspect of a complex scramble release device in a broadcasting communication convergence system according to the present invention.

As shown in FIG 3, the complex scramble release device includes a broadcast receiving unit 31 that receives MPTSs from an outside source, and then transmits PID information of corresponding MPTSs to a control section 33, a switch 32 that receives the MPTSs from the broadcast receiving unit 31. The broadcast receiving unit 31 then outputs the MPTSs after switching them according to commands of the control section 33. A plurality of descramblers 34-1 and 34-2 that receive the scrambled MPTSs from the switch 32, descrambles the MPTSs, and then output the descrambled MPTSs, and a control section 33 which receives the PID information from the broadcast receiving unit 31, and then controls the switch 32 so that a MPTSs requiring descrambling can be connected to a corresponding descrambler, according to an already stored channel/descrambler table.

Specifically, the broadcast receiving unit 31 receives the MPTSs, which comprises digital broadcasting information from various broadcasters, extracts PID information of the received MPTSs, and then transmits the extracted PID information. Further, the broadcast receiving unit 31 outputs the MPTSs to the switch 32.

The descramblers 34-1 and 34-2 descramble the scrambled MPTSs received via the switch 32. Herein, since the MPTSs have been scrambled in different ways according to the methods of different broadcasters, the descramblers 34-1 and 34-2 use different methods of descrambling, respective to the type of scrambling of a particular broadcaster..

The switch 32, which receives the MPTSs from the broadcast receiving unit 31, switches the MPTSs according to the descramblers under the control signal of the control section 33.

The control section 33, which receives the PID information of the MPTSs inputted from the broadcast receiving unit 31, also controls the switch 32 so that MPTSs requiring the descrambling can be connected to the descramblers 34-1 and 34-2 in accordance with respective PID information, by means of the already stored channel/descrambler table. Further, the control section 33 controls the MPTSs, which requires no descrambling, so that it is outputaccording to a specific input sequence.

FIG 4 is an exemplary view of a channel/broadcasting table utilized in a complex scramble release device in a broadcasting communication convergence system.

As shown in FIG 4, the PID information of the inputted MPTSs is divided into pay channels, for ewxample, a pay channel 1 and a pay channel 2, etc., and a table is made by means of MAC addresses of the descramblers 34-1 and 34-2 and output ports of the switch 32. Further, according to the PID information of the MPTSs inputted after the table has been made, the corresponding MPTSs are then switched to a MAC address of a descrambler, in which the corresponding MPTSs are descrambled, and to an output port of a corresponding switch.

According to the present invention, when the complex scramble release device constructed as above is utilized, the MPTSs are scrambled in various ways yet can all still be descrambled at one time and then output.

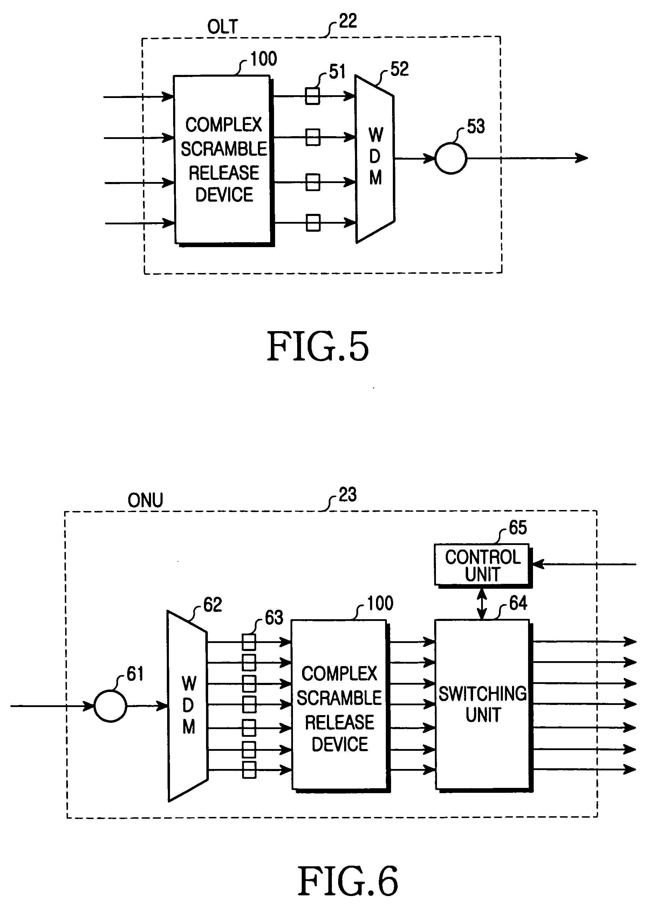

Additionally, the complex scramble release device can be provided at an OLT or ONU in the broadcasting communication convergence system according to the present invention, and respective embodiments are as shown in FIG 5 to FIG 6.

FIG 5 shows a construction of one aspect of the invention in which the complex scramble release device according to the present invention is applied to an OLT in a broadcasting communication convergence system. As shown in FIG 5, the OLT in the broadcasting communication convergence system includes a complex scramble release device 100 for receiving respective MPTSs transmitted from the broadcasters 11-1 and 11-2, releasing the scrambling of the MPTSs, and then transmitting them, an electrooptic converter 51 for receiving the MPTSs, in which the scramble has been released, and then converting the MPTSs into optical signals, a WDM (wavelength division multiplexing) multiplexer 52 for multiplexing the converted MPTSs into one optic signal, an optical transmission section 53 for transmitting the multiplexed optic signal.

FIG 6 shows a construction of another aspect of the invention in which the complex scramble release device according to the present invention is applied to an ONU in a broadcasting communication convergence system.

As shown in FIG 6, the ONU in the broadcasting communication convergence system includes an optical reception section 61 that receives optical signals, a WDM demultiplexer 62 for demultiplexing the received optical signals according to respective wavelengths, an optoelectric converter 63 converting MPTS optical signals in accordance with wavelengths into electric signals. In addition, a complex scramble release device 100 receives the MPTSs that have been converted into electric signals, releases the scrambling of the MPTSs, and then transmits them. Switching section 64 receives the MPTSs, in which the scrambling has been released, extracts PID information, and then switches the MPTSs according to subscribers by a control of a control section. The control section (65) receives favorite channels from a subscriber, and controlling the switching section 64.

Next, the entire operation of the broadcasting communication convergence system will be described with reference to the above-mentioned construction. The broadcast receiving unit 31 in the complex scramble release device 100 receives a plurality of MPTSs including MPTS streams, which have been encrypted and scrambled, from several broadcasters 11-1 and 11-2.

Subsequently, the scrambled MPTS signals are descrambled through the control section 33 and the switch 32, respectively, and converted into optical signals.

Next, wavelength division multiplexing is performed on the converted optical signals, and the multiplexed signals are transmitted to the ONU in one type of optical signal.

The optical signal transmitted to the ONU divides into MPTS signals according to respective wavelengths through wavelength division demultiplexing. The respective MPTS signals are converted into electric signals, and then inputted to the switching section. Further, the inputted signals are switched so that a MPTS signal, which is required by a subscriber, can be connected to the subscriber according to the control of the control section.

Although the above description is given of entire operation in the case in which a complex scramble release device included in an OLT, a similar way can be employed in the case in which a complex scramble release device included in an ONU.

According to the present invention as described above, a user can watch a broadcasting encrypted in various ways by means of a set top box (STB) with no decryption function. Moreover, according to the present invention, a subscriber can watch various broadcastings by means of one STB. Furthermore, according to the present invention, since encrypted MPTSs are decrypted in an optical subscriber network and then provided to a user, a corresponding decoder is installed on only the optical subscriber network even if a broadcast employing a new CAS is added, thereby enabling easy application.

While the invention has been shown and described with reference to certain preferred embodiments thereof, it will be understood by those skilled in the art that various changes in form and details may be made therein without departing from the scope of the invention as defined by the appended claims.

## Claims

1. A complex scramble release device for receiving a plurality of scrambled digital broadcast streams in a broadcasting communication convergence system and descrambling the scrambled streams for receipt by a subscriber, said complex scramble release device comprising:
a control section for receiving packet identifier definitions information from the broadcast receiving unit,
a broadcast receiving unit for receiving a plurality of multi-program transport streams comprising both scrambled multi-program transport streams and unscrambled multi-program transport streams from an outside source, and for transmitting the packet identifier definitions information for each of the multi-program transport streams to the control section;
a switch for receiving the multi-program transport streams from the broadcast receiving unit, and switching at least a portion of the scrambled multi-program transport streams according to control of the control section; and
a plurality of descramblers for descrambling the scrambled multi-program transport streams from among the multi-program transport streams switched by the switch, and then outputting the descrambled multi-program transport streams,
wherein said control section controls the switch so that the plurality of scrambled multi-program transport streams that require a descrambling are switched to a corresponding descrambler from among the plurality of descramblers.

2. The device according to claim 1, wherein, for controlling the switch, the control section is adapted for utilizing packet identifier definitions information of the multi-program transport streams received from the broadcast receiving unit, MAC addresses of the descramblers connected to the switch, and a channel/descrambler table comprised of corresponding output ports of the switch.

3. The device according to claim 1 or 2, wherein the broadcast receiving unit receives the multi-program transport streams from an outside source, outputs the received multi-program transport streams to the switch, extracts packet identifier definitions information of the received multi-program transport streams, and then transmits the extracted packet identifier definitions information to the control section.

4. The device according to claim 2, wherein the broadcast receiving unit receives the multi-program transport streams from an outside source, outputs the received multi-program transport streams to the switch, extracts packet identifier definitions information of the received multi-program transport streams, and then transmits the extracted packet identifier definitions information to the control section.

5. The device according to one of claims 1 to 4, wherein the plurality of descramblers respectively correspond to the scrambled multi-program transport streams from among the received multi-program transport streams.

6. The device according to claim 2, wherein the plurality of descramblers respectively correspond to the scrambled multi-program transport streams from among the received multi-program transport streams.

7. The device according to claim 5, wherein, according to a control of the control section, the switch connects the scrambled multi-program transport streams from among the received multi-program transport streams to the respectively corresponding descramblers, and switches so that the multi-program transport streams, which have not been scrambled, can be outputted according to an inputted sequence.

8. An optical subscriber network employing a complex scramble release device for a plurality of scrambled digital broadcasting streams in a broadcasting communication convergence system, the optical subscriber network comprising:
an optical line termination including a complex scramble release device for receiving a plurality of respective multi-program transport streams comprising both scrambled multi-program transport streams and unscrambled multi-program transport streams transmitted from a plurality of broadcasters, said device releasing a scramble of the multi-program transport streams, and then transmitting them;
an electrooptic converter for receiving the multi-program transport streams output from the complex scramble release device, and then for converting the multi-program transport streams into optical signals;
a wavelength division multiplexer for multiplexing the converted multi-program transport streams into one optic signal, an optical transmission section for transmitting the multiplexed one optic signal; and
an optical network unit for performing wavelength division demultiplexing on the optic signal transmitted from the optical line termination, converting the demultiplexed signals into electric signals, and then switching the converted multi-program transport streams according to subscribers.

9. The network according to claim 8, wherein the complex scramble release device comprises:
a broadcast receiving unit for receiving respective multi-program transport streams transmitted from a plurality of broadcasters, and transmitting packet identifier definitions information of the multi-program transport streams to a control section;
a switch for receiving the multi-program transport streams from the broadcast receiving unit, and switching scrambled multi-program transport streams and multi-program transport streams that have not been scrambled;
a plurality of descramblers for descrambling the scrambled multi-program transport streams from among the multi-program transport streams switched by the switch, and outputting the descrambled multi-program transport streams; and
a control section for receiving the packet identifier definitions information from the broadcast receiving unit, and controlling the switch so that multi-program transport streams requiring descrambling can be switched to the descramblers.

10. An optical subscriber network employing a complex scramble release device for a plurality of scrambled digital broadcasting streams in a broadcasting communication convergence system, the optical subscriber network comprising:
an optical line termination for receiving a plurality of respective multi-program transport streams transmitted from a plurality of broadcasters, converting the received multi-program transport streams into optical signals, multiplexing the converted optical signals in one optical signal, and then outputting one optical signal; and
an optical network unit which comprises:
a wavelength division demultiplexer for performing wavelength division demultiplexing on the optic signal transmitted from the optical line termination;
an optoelectric converter for converting the demultiplexed signals into electric signals, respectively;
a complex scramble release device for receiving the converted multi-program transport streams, releasing a scrambling of the multi-program transport streams, and then transmitting them;
a first switch for receiving the multi-program transport streams outputted from the complex scramble release device, and switching the multi-program transport streams according to subscribers; and
a first control section for receiving favorite channels from a subscriber, and controlling the first switch so that a corresponding channel of an input multi-program transport streams of the first switch can be connected to the subscriber.

11. An optical subscriber network according to claim 10, wherein the complex scramble release device comprises:
a broadcast receiving unit for receiving the multi-program transport streams converted by the optoelectric converter, and transmitting packet identifier definitions information of the multi-program transport streams to a control section;
a second switch for receiving the multi-program transport streams from the broadcast receiving unit, and switching scrambled multi-program transport streams and multi-program transport streams, which have not been scrambled;
a plurality of descramblers for descrambling the scrambled multi-program transport streams from among the multi-program transport streams switched by the second switch, and outputting the descrambled; and
a control section for receiving the packet identifier definitions information from the broadcast receiving unit, and controlling the second switch so that multi-program transport streams requiring descrambling can be switched to the descramblers.

12. A method of providing a complex scramble release for receiving a plurality of scrambled digital broadcast streams in a broadcasting communication convergence system and descrambling the scrambled streams for receipt by a subscriber, said method comprising the steps of :
(a) providing a control section for receiving packet identifier definitions information from the broadcast receiving unit;
(b) receiving a plurality of multi-program transport streams by a broadcast receiving unit comprising both scrambled multi-program transport streams and unscrambled multi-program transport streams from an outside source;
(c) transmitting the packet identifier definitions information for each of the multi-program transport streams to the control section;
(d) switching at least a portion of the scrambled multi-program transport streams according to control of the control section by a switch for receiving the multi-program transport streams from the broadcast receiving unit; and
(e) descrambling the scrambled multi-program transport streams from among the multi-program transport streams switched by a plurality of descramblers, and then outputting the descrambled multi-program transport streams,
wherein said control section controls the switching in step (d) so that the plurality of scrambled multi-program transport streams that require a descrambling are switched to a corresponding descrambler from among the plurality of descramblers.

13. The method according to claim 12, wherein, for controlling the switch, the control section is adapted for utilizing packet identifier definitions information of the multi-program transport streams received from the broadcast receiving unit, MAC addresses of the descramblers connected to the switch, and a channel/descrambler table comprised of corresponding output ports of the switch.

14. The method according to claim 12, wherein the broadcast receiving unit receives the multi-program transport streams from an outside source, outputs the received multi-program transport streams to the switch, extracts packet identifier definitions information of the received multi-program transport streams, and then transmits the extracted packet identifier definitions information to the control section.

15. The method according to claim 13, wherein the broadcast receiving unit receives the multi-program transport streams from an outside source, outputs the received multi-program transport streams to the switch, extracts packet identifier definitions information of the received multi-program transport streams, and then transmits the extracted packet identifier definitions information to the control section.

16. The method according to claim 12, wherein the plurality of descramblers respectively correspond to the scrambled multi-program transport streams from among the received multi-program transport streams.

17. The method according to claim 13, wherein the plurality of descramblers respectively correspond to the scrambled multi-program transport streams from among the received multi-program transport streams.

18. The method according to claim 16, wherein, according to a control of the control section, the switch connects the scrambled multi-program transport streams from among the received multi-program transport streams to the respectively corresponding descramblers, and switches so that the multi-program transport streams, which have not been scrambled, can be outputted according to an inputted sequence.

19. A method for providing an optical subscriber network employing a complex scramble release device for a plurality of scrambled digital broadcasting streams in a broadcasting communication convergence system, comprising the steps of:
(a) providing an optical line termination including a complex scramble release device for receiving a plurality of respective multi-program transport streams comprising both scrambled multi-program transport streams and unscrambled multi-program transport streams transmitted from a plurality of broadcasters, said device releasing a scramble of the multi-program transport streams, and then transmitting them;
(b) providing an electrooptic converter for receiving the multi-program transport streams output from the complex scramble release device, and then for converting the multi-program transport streams into optical signals;
(c) multiplexing the converted multi-program transport streams into one optic signal by a wavelength division multiplexer;
(d) transmitting the multiplexed one optic signal by providing an optical transmission section;
(e) performing wavelength division demultiplexing on the optic signal transmitted from the optical line termination by an optical network unit; and
(f) converting the demultiplexed signals into electric signals, and then switching the converted multi-program transport streams according to subscribers.

20. The method according to claim 19, wherein the complex scramble release device used comprises:
a broadcast receiving unit for receiving respective multi-program transport streams transmitted from a plurality of broadcasters, and transmitting packet identifier definitions information of the multi-program transport streams to a control section;
a switch for receiving the multi-program transport streams from the broadcast receiving unit, and switching scrambled multi-program transport streams and multi-program transport streams that have not been scrambled;
a plurality of descramblers for descrambling the scrambled multi-program transport streams from among the multi-program transport streams switched by the switch, and outputting the descrambled multi-program transport streams; and
a control section for receiving the packet identifier definitions information from the broadcast receiving unit, and controlling the switch so that multi-program transport streams requiring descrambling can be switched to the descramblers.

21. A method of employing a complex scramble release device in optical subscriber network for a plurality of scrambled digital broadcasting streams in a broadcasting communication convergence system, the method comprising:
(a) receiving a plurality of respective multi-program transport streams transmitted from a plurality of broadcasters by an optical line termination;
(b) converting the received multi-program transport streams into optical signals;
(c) multiplexing the converted optical signals in one optical signal, and then outputting one optical signal;
(d) demultiplexing the optic signal transmitted from the optical line termination to an optical network unit by a wavelength division demultiplexer for performing wavelength division;
(e) converting the demultiplexed signals into electric signals, respectively by an optoelectric converter;
(f) receiving the converted multi-program transport streams by a complex scramble release device that releases a scrambling of the multi-program transport streams, and then transmits them;
(g) providing a first switch for receiving the multi-program transport streams outputted from the complex scramble release device, and for switching the multi-program transport streams according to subscribers; and
(h) providing a first control section for receiving favorite channels from a subscriber, and controlling the first switch so that a corresponding channel of an input multi-program transport streams of the first switch can be connected to the subscriber.

22. An optical subscriber network according to claim 21, wherein the complex scramble release device used comprises:
a broadcast receiving unit for receiving the multi-program transport streams converted by the optoelectric converter, and transmitting packet identifier definitions information of the multi-program transport streams to a control section;
a second switch for receiving the multi-program transport streams from the broadcast receiving unit, and switching scrambled multi-program transport streams and multi-program transport streams, which have not been scrambled;
a plurality of descramblers for descrambling the scrambled multi-program transport streams from among the multi-program transport streams switched by the second switch, and outputting the descrambled multi-program transport streams; and
a control section for receiving the packet identifier definitions information from the broadcast receiving unit, and controlling the second switch so that multi-program transport streams requiring descrambling can be switched to the descramblers.
